# EUROPÄISCHE PATENTANMELDUNG

(11) **EP 3 770 448 A1**
(43) Veröffentlichungstag der Anmeldung: **27.01.2021**
(21) Anmeldenummer: 20186023.6
(22) Anmeldetag: 15.07.2020
(51) Int. Cl.: F16B 12/26

(54) **VERBINDUNGSSYSTEM FÜR DIE MECHANISCHE VERBINDUNG ZWEIER WERKSTOFFE**

(30) Priorität: 23.07.2019 EP 19187929
(71) Anmelder: Lercher GmbH, 6833 Klaus (AT)
(72) Erfinder: Ender-Lercher, Sandra, 6833 Klaus (AT); Lercher, Dominik, 6833 Klaus (AT)
(74) Vertreter: Kaminski Harmann

(57) **Zusammenfassung**

Verbindungssystem zum mechanischen Verbinden zweier Werkstoffe (A, B), insbesondere für den Möbelbau, aufweisend eine eine Erstreckungsachse (7) umfassende Hülse (4) zur Aufnahme eines Zapfens (5) aufweisende Aufnahmevorrichtung (1) und eine den Zapfen (5) aufweisende Steckvorrichtung (2), wobei das Verbindungssystem konfiguriert ist, dass bei in die Hülse (4) eingesetztem Zapfen (5) aufgrund eines radialen Drückens eines Federelements (10) der Aufnahmevorrichtung (1) gegen einen Bauchbereich (12) des Zapfens (5) eine Verspannung des Zapfens (5) mit der Hülse (4) in axialer Richtung bezüglich der Erstreckungsachse (7) erfolgt.

## Beschreibung

Die Erfindung betrifft ein Verbindungssystem zum mechanischen Verbinden zweier Werkstoffe mittels einer in einem Werkstoff verankerten Aufnahmevorrichtung und einer in einem damit zu verbindenden Werkstoff verankerten Steckvorrichtung.

Mechanische Verbindungssysteme werden beispielsweise im Möbelbau eingesetzt zum Verbinden zweier Bauteile, wie beispielsweise Holzplatten. Dabei sind Verbindungssysteme bekannt, welche in erster Linie die gegenseitige Ausrichtung beim Verkleben der zwei Bauteile erleichtern bzw. sicherstellen sollen. Ferner sind Verbindungssysteme bekannt, welche dafür ausgelegt sind, die beiden zu verbindenden Bauteile mechanisch fest miteinander zu verbinden, beispielsweise in Kombination mit einer Verklebung der beiden Bauteile. Insbesondere letztere Systeme erfordern typischerweise einen erhöhten Installationsaufwand und Platzbedarf sowie die Verwendung von Spezialwerkzeug beim Einbau in die Werkstücke. Zudem benötigen solche Systeme aus dem Stand der Technik beim späteren Zusammenbau der beiden Werkstücke oft zusätzliche Hilfswerkzeuge wie beispielsweise Schraubenzieher und Klammern um eine optimale Verbindung und Verklebung der Bauteile sicherzustellen.

Es ist eine Aufgabe der Erfindung ein verbessertes Verbindungssystem zum mechanischen Verbinden zweier Werkstoffe bereitzustellen, insbesondere ein Verbindungssystem mit reduziertem Installationsaufwand und Platzbedarf sowie einer vereinfachten Handhabung beim Zusammenbau von mit dem Verbindungssystem ausgestatteten Werkstoffen.

Diese Aufgabe wird durch die Verwirklichung von zumindest einem Teil der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung betrifft ein Verbindungssystem zum mechanischen Verbinden zweier Werkstoffe, z.B. im Bereich des Möbelbaus, mittels einer Aufnahmevorrichtung, welche eine eine Erstreckungsachse umfassende Hülse zur Aufnahme eines Zapfens aufweist in Kombination mit einer den Zapfen aufweisenden Steckvorrichtung. Das Verbindungssystem ist dabei konfiguriert, dass bei in die Hülse eingesetztem Zapfen in axialer Richtung bezüglich der Erstreckungsachse eine Verspannung des Zapfens mit der Hülse erfolgt, wobei der Zapfen und die Hülse axial entlang einer Vorspannstrecke gegeneinander gedrückt werden.

Die Erfindung betrifft ferner die Aufnahmevorrichtung und die Steckvorrichtung zur Verwendung im erfinderischen Verbindungssystem.

Das Verbindungssystem verhindert einerseits die laterale Beweglichkeit der Werkstoffe zueinander. Andererseits ist das Verbindungssystem entlang der Erstreckungsachse selbstverspannend, wodurch beispielsweise beim Verkleben der Werkstoffe auf eine Korpuspresse oder Schraubzwinge verzichtet werden kann. Dadurch wird ein einfacher handhabbares Verbindungssystem bereitgestellt, z.B. zur (temporären) Fixierung zweier Bauteile während der Aushärtung eines zwischenliegenden Klebstoffs. Alternativ kann das erfinderische Verbindungssystem auch derart ausgebildet sein, dass die Bauteile ausschliesslich mechanisch, d.h. ohne Verwendung von Klebstoff, miteinander verbunden werden können.

Zum Beispiel sind die Aufnahmevorrichtung und die Steckvorrichtung derart aufeinander abgestimmt und konfiguriert, dass die Länge der Vorspannstrecke mindestens 0.5 mm, insbesondere mindestens 1 mm, beträgt, im Speziellen wobei die Länge der Vorspannstrecke zwischen 1 bis 2 mm liegt.

Das erfindungsgemässe Verbindungsystem bzw. die Aufnahmevorrichtung und die Steckvorrichtung können zum Verbinden von Werkstoffen verschiedener Art verwendet werden, z.B. Werkstoffe aus Materialien wie Holz, z.B. Vollholz oder Spanplatten, Gipskarton, Ziegel, Beton, oder aus einem Verbundwerkstoff.

Die Aufnahmevorrichtung hat eine längs einer Erstreckungsachse ausgebildete längliche Form und an einem vorderen Ende eine Widerhakenanordnung zum Verankern der Aufnahmevorrichtung in einem Bohrloch eines Werkstoffs. Die Widerhakenanordnung hat einen die Erstreckungsachse umfassenden Grundkörper mit radial aus dem Grundkörper herausragenden Spreizelementen, welche konfiguriert sind, dass sie bei einem Einpressen der Widerhakenvorrichtung in das Bohrloch eine widerhakende Wirkung zur Hemmung der Lösung der Widerhakenanordnung aus dem Bohrloch entfalten. Ferner weist die Aufnahmevorrichtung eine von einem dem vorderen Ende gegenüberliegendem hinteren Ende zugängliche, mit der Widerhakenanordnung verbundene und die Erstreckungsachse umfassende Hülse zur Aufnahme des Zapfens auf, wobei die Hülse eine Vorspannanordnung zum Erzeugen einer Vorspannung des Zapfens in Richtung des vorderen Endes aufweist. Die Aufnahmevorrichtung verfügt also über eine zu dem hinteren Ende hin geöffnete Hülse, die mit der Widerhakenanordnung verbunden ist und dabei die Erstreckungsachse umfasst. Das Innenvolumen der Hülse kann zum vorderen Ende hin, z.B. im Bereich der Widerhakenordnung, begrenzt bzw. abgeschlossen sein. Die Aufnahmevorrichtung kann an dem hinteren Ende eine mit der Widerhakenanordnung verbundene die Erstreckungsachse umfassende Hülse zur Aufnahme des Zapfens aufweisen, wobei die Hülse eine Vorspannanordnung zum Erzeugen einer Vorspannung des Zapfens in Richtung des vorderen Endes aufweist. Die Hülse ist dabei derart konfiguriert, dass die Vorspannanordnung ein Federelement aufweist, das zur Interaktion mit einem Bauchbereich des Zapfens konfiguriert ist. Bei eingesetztem Zapfen drückt das Federelement durch eine radial zur Erstreckungsachse wirkende Kraft gegen den Zapfen, insbesondere gegen den Bauchbereich des Zapfens. Durch die Interaktion des Federelements mit dem Bauchbereich wird eine entlang der Erstreckungsachse hin zum vorderen Ende wirkende axiale Kraft auf den Zapfen erzeugt. Der Zapfen wird als Reaktion auf die axiale Kraft innerhalb einer hülsenseitigen Vorspannstrecke in der Hülse entlang der Erstreckungsachse hin zum vorderen Ende gedrückt.

Zum Beispiel sind die Hülse und die Widerhakenanordnung in einer Ausführungsform derart ausgebildet, dass sie jeweils durch einen Kreiszylinder umrissen werden, wobei der die Hülse umreissende Kreiszylinder einen grösseren Zylinderradius hat als der die Widerhakenanordnung umreissende Kreiszylinder. In anderen Worten: die Aufnahmevorrichtung ist derart geformt, dass das Werkstück mittels einer zweistufigen Bohrung, d.h. mittels zweier einfacher Bohrungen mit jeweils unterschiedlichem Bohrdurchmesser, für die Installation der Aufnahmevorrichtung vorbereitet werden kann. Dabei können Standardbohrer mit relativ kleinem Bohrdurchmesser, beispielsweise von 8 mm, verwendet werden, wobei kein Spezialwerkzeug, z.B. kein Hinterschnitt, notwendig ist. Somit können beispielsweise auch filigrane Platten miteinander verbunden werden.

In einer weiteren Ausführungsform weist die Hülse eine Rastanordnung auf, die zum Zusammenwirken (Anschlag, Eingriff etc.) mit einer Kante des Zapfens konfiguriert ist, wobei ein Zusammenwirken der Rastanordnung mit der Kante ein Einführen des Zapfens in die Hülse in Richtung des vorderen Endes der Hülse zulässt, jedoch ein Herausziehen in Richtung des hinteren Endes hemmt.

Insbesondere kann die Rastanordnung eine Klinke aufweisen, insbesondere mindestens zwei Klinken, konfiguriert zum Eingriff in (bzw. Anschlag an) die Kante des Zapfens, wobei die Klinke derart gegen die Erstreckungsachse vorgespannt ist, dass diese ein Einführen des Zapfens in die Hülse in Richtung des vorderen Endes zulässt, durch den Eingriff in die Kante jedoch ein Herausausziehen in Richtung des hinteren Endes hemmt. Beispielsweise ist die Rastanordnung relativ zur Vorspannanordnung näher beim vorderen Ende angeordnet.

Im Speziellen ist das Verbindungssystem dadurch derart ausgebildet, dass die Hülse und der Zapfen nach erfolgter Kopplung nicht mehr zerstörungsfrei voneinander trennbar sind.

In einer weiteren Ausführungsform ist die Hülse derart konfiguriert, dass die hülsenseitige Vorspannstrecke in Richtung des hinteren Endes durch die Klinke begrenzt ist, welche bei eingesetztem Zapfen als Anschlag für die Kante wirkt.

In einer weiteren Ausführungsform bildet das Federelement die Rastanordnung der Hülse und ist konfiguriert zum Zusammenwirken mit (Eingreifen in bzw. Anschlag an etc.) der Kante des Zapfens. Das Federelement ist derart gegen die Erstreckungsachse vorgespannt, dass dieses Federelement ein Einführen des Zapfens in die Hülse in Richtung des vorderen Endes zulässt, durch das Zusammenwirken mit der Kante jedoch das Herausziehen in Richtung des hinteren Endes hemmt.

Das Federelement ist dabei so ausgelegt und ausgeformt, dass es dauerhaft (nach Einstecken des Zapfens in die Hülse) die Vorspannkraft für das Eindrücken und Halten des Zapfens in die bzw. der Hülse bereitstellt. Zudem bildet das Federelement gleichzeitig ein Rückhalteelement, das mittels Angreifens, Anschlagens oder Eingreifens seitens der zapfenseitigen Kante das Herausziehen des Zapfens aus der Hülse verhindert. Ein derart ausgebildetes Federelement stellt somit gleichzeitig diese zwei für die Wirkungsweise des Verbindungssystems sehr vorteilhafte Funktionen bereit.

Die Spreizelemente der Widerhakenanordnung wirken als Widerhaken. Beim Eindringen in bestimmte Werkstoffe wie beispielsweise Holz können sie ferner beim Eindringen ein Aufrauen von Werkstofffasern bewirken, wodurch beim Lösungsversuch der Ankerrückhalt verbessert wird und eine kräftige Verankerung beim Zug durch Verkrallung erzeugt wird.

In einer weiteren Ausführungsform sind die Spreizelemente in in Axialrichtung der Erstreckungsachse beabstandeten Ringen um die Erstreckungsachse angeordnet, z.B. in mindestens drei beabstandeten Ringen, wobei die Ringe jeweils mindestens zwei, insbesondere mindestens vier, voneinander freigestellte Spreizelemente aufweisen, d.h. benachbarte Spreizelemente desselben Rings sind voneinander beabstandet. In anderen Worten: die Ringe weisen Unterbrechungen auf, welche beispielsweise eine grössere Nachgiebigkeit der Spreizelemente bewirken, wodurch die Zerstörung des Werkstoffs beim Eindringen der Widerhakenanordnung reduziert bzw. verhindert wird.

Zum Beispiel sind die Spreizelemente sägezahnförmig, trapezförmig, pyramidenförmig, oder blockförmig ausgebildet und weisen insbesondere Abrundungen auf.

In einer weiteren Ausführungsform ist die Aufnahmevorrichtung und/oder der Zapfen aus Kunststoff, insbesondere aus glasfaserverstärktem Kunststoff, gefertigt. Durch die Verwendung von glasfaserverstärktem Kunststoffmaterial wird beispielsweise eine Optimierung der Elastizität des Verbindungssystems ermöglicht.

In einer weiteren Ausführungsform ist das Federelement der Vorspannanordnung ausgebildet als ein sich längs der Erstreckungsachse erstreckendes federnd ausgebildetes Hebelelement, welches derart konfiguriert ist, dass bei in die Hülse eingeführtem Zapfen ein von der Hülse abstehender Bereich des Hebelelements radial gegen den Bauchbereich des Zapfens drückt.

Insbesondere weist die Vorspannanordnung zwei sich gegenüberliegende jeweils längs der Erstreckungsachse erstreckende federnd ausgebildete Hebelelemente auf, welche konfiguriert sind, dass bei in die Hülse eingeführtem Zapfen jeweils ein von der Hülse abstehender Bereich des jeweiligen Hebelelements radial gegen den Bauchbereich des Zapfens drückt.

Die zur Verwendung mit der Vorspannanordnung konfigurierte Steckvorrichtung hat eine längs einer Steckachse ausgebildete längliche Form, wobei bei eingesetztem Zapfen in die Vorspannanordnung die Steckachse im Wesentlichen parallel oder koaxial zur Erstreckungsachse der Aufnahmevorrichtung ausgerichtet ist.

Die Steckvorrichtung weist an einem vorderen Ende ebenfalls eine Widerhakenanordnung zum Verankern der Steckvorrichtung in einem Bohrloch eines Werkstoffs auf, wobei die Widerhakenanordnung im Wesentlichen identisch zur Widerhakenanordnung der Vorspannanordnung ausgebildet sein kann, d.h. einen die Steckachse umfassenden Grundkörper mit radial aus dem Grundkörper herausragenden Spreizelementen aufweist, welche konfiguriert sind, dass sie bei einem Einpressen der Widerhakenvorrichtung in das Bohrloch eine widerhakende Wirkung zur Hemmung der Lösung der Widerhakenanordnung aus dem Bohrloch entfalten. An einem dem vorderen Ende gegenüberliegenden hinteren Ende weist die Steckvorrichtung einen mit der Widerhakenanordnung verbundenen die Steckachse umfassenden Zapfen zum Einführen in eine Hülse einer Vorspannanordnung der obig beschriebenen Art auf. Dabei weist der Zapfen einen die Steckachse umfassenden Bauchbereich auf, der derart dimensioniert und ausgeformt ist, dass der Bauchbereich bei eingesetztem Zapfen in die Hülse in Interaktion mit einem Federelement der Hülse tritt, damit aufgrund eines Drückens des Federelements gegen eine Kontaktfläche des Bauchbereichs durch eine radial zur Steckachse wirkende Kraft eine entlang der Steckachse hin zum hinteren Ende wirkende axiale Kraft auf den Zapfen erzeugt wird.

Zum Beispiel weist der Zapfen im Bauchbereich eine bezüglich einer Rotation um die Steckachse rotationssymmetrisch oder asymmetrisch ausgebildete ausbuchtende Verformung auf, welche die Kontaktfläche zur Interaktion mit dem Federelement bereitstellt. Eine rotationssymmetrisch ausgebildete Ausbuchtung hat beispielsweise den Vorteil, dass der Zapfen unabhängig von seiner Drehrichtung mit der Hülse in Interaktion treten kann, d.h. es ist keine relative Ausrichtung des Zapfens notwendig um diesen mit der Hülse zu koppeln.

In einem anderen Beispiel weist der Bauchbereich ein vom Zapfen radial abstehendes die Kontaktfläche bereitstellendes Element auf, z.B. einen abgespreizten Flügel oder einen abgespreizten Arm. Auch in dieser Ausführungsform ist es vorteilhaft, wenn umfänglich um die Steckachse mehrere abstehende Elemente nebeneinander angeordnet sind, so dass der Umriss des Zapfens im Bauchbereich eine rotationssymmetrische Ausbuchtung hat, z.B. wobei mehrere abgespreizte Arme umfänglich um die Steckachse angeordnet sind, so dass diese einen trichterförmigen Umriss bilden.

In einer Ausführungsform ist der Bauchbereich des Zapfens derart ausgebildet, dass der Umriss des Bauchbereichs eine trapezförmige, pyramidenförmige, oder schlauchförmige Ausbuchtung aufweist, welche insbesondere Abrundungen aufweist.

In einer Ausführungsform kann der Bauchbereich des Zapfens eine Taille mit meinem bezüglich der Steckachse definierten Taillendurchmesser und ein entlang der Steckachse von der Taille entferntes Bauchende mit einem maximalen Bauchdurchmesser aufweisen. Der Bauchdurchmesser ist dabei grösser als der Taillendurchmesser, das Bauchende ist relativ zur Taille näher beim hinteren Ende der Steckvorrichtung angeordnet und ein Abstand zwischen der Taille und dem Bauchende definiert eine zapfenseitige Vorspannstrecke.

Hierdurch kann bei in die Hülse eingesetztem Zapfen ein derartiges Zusammenwirken des Federelements mit dem Bauchbereich resultieren, dass bei Interaktion des Federelements mit der Taille eine kleinere axiale Kraft hin zum hinteren Ende der Steckvorrichtung erzeugt ist, als bei Interaktion des Federelements mit dem Bauchende.

Der Bauchbereich ist insbesondere so ausgeformt und angeordnet, dass dieser beim Einführen des Zapfens in die Hülse mit dem Federelement der Hülse in Zusammenwirkung gebracht wird und der Zapfen so über zumindest einen Teil der zapfenseitigen Vorspannstrecke in die Hülse gedrückt wird. Diese Funktionalität wird durch die entsprechende Ausgestaltung der Hülse und die dadurch ebenfalls gegebene hülsenseitige Vorspannstrecke bereitgestellt.

Sobald beim Einführen des Zapfens in die Hülse die Federelemente an dem Bauchende des Zapfens angreifen, d.h. eine radial zur Erstreckungsachse wirkende Kraft gegen den Bauchbereich bewirken, ergibt sich die axiale Kraft hin zum vorderen Ende der Aufnahmevorrichtung. Hierdurch wird der Zapfen in die Hülse gedrückt. Diese Kraft bleibt während der Einführbewegung bestehen, nimmt jedoch bis zum Erreichen der Taille (mit dem Federelement) ab. Die axiale Kraft wird jedoch insbesondere nie gleich 0, sondern bleibt im eingeführten Zustand bestehen. Zapfen und Hülse sind dabei so dimensioniert und ausgeformt, dass der Angriffspunkt des Federelements an dem Bauchbereich nicht weiter in Richtung des vorderen Endes der Steckvorrichtung liegen kann, als die Taille an der Steckvorrichtung angeordnet ist. Dies kann beispielsweise durch eine entsprechend begrenzte Tiefe der Hülse realisiert sein, sodass der Zapfen nur über eine bestimmte Strecke in die Hülse einführbar ist.

Die Vertiefung der Hülse kann sich dabei entlang der Erstreckungsachse bis in den Bereich der Widerhakenanordnung erstrecken, wobei die Widerhakenanordnung radial aussen an der Aufnahmevorrichtung und die Vertiefung der Hülse im Innenbereich der Aufnahmevorrichtung ausgeformt ist.

Durch diese Ausgestaltung wird einerseits die Vorspannkraft über eine Vorspannstrecke bereitgestellt. Andererseits bleibt diese Vorspannkraft auch bei Erreichen des Angriffspunkts an der Taille bestehen und stellt damit den vorteilhaften Effekten bereit, dass bei der Verbindung zweier Werkstücke mit der erfindungsgemässen Aufnahmevorrichtung und Steckvorrichtung diese Werkstücke auch nach dem Verbinden mit einer bestimmten Zugkraft (entsprechend der Vorspannkraft) zusammengehalten werden.

In einer Ausführungsform weist der Zapfen zudem eine die Steckachse umfassende Kante aufweist, die derart konfiguriert ist, dass bei in die Aufnahmevorrichtung gemäss oben ausgebildeter Hülse eingesetztem Zapfen die Rastanordnung der Hülse derart in die Kante eingreift bzw. anschlägt, dass dabei eine Hemmung des Herausziehens der Steckvorrichtung aus der Hülse in Richtung des vorderen Endes der Steckvorrichtung erzeugt wird, insbesondere wobei das Federelement oder die Klinke die Funktion der Rastanordnung bereitstellt und die Kante mit dem Federelement oder der Klinke zusammenwirkt.

In einer Ausführungsform weist der Zapfen eine die Steckachse umfassende Kante auf, die konfiguriert ist, dass bei in die eine Klinke aufweisende Aufnahmevorrichtung der obigen Art eingesetztem Zapfen die Klinke der Aufnahmevorrichtung derart in die Kante eingreift, dass bei in die Kante eingreifender Klinke eine Hemmung des Rausziehens der Steckvorrichtung aus der Hülse in Richtung des vorderen Endes der Steckvorrichtung erzeugt wird. Die Kante kann insbesondere eine Kantenfläche in Richtung des vorderen Endes der Steckvorrichtung bereitstellen, insbesondere wobei eine Normale auf die Kantenfläche im Wesentlichen parallel zur Steckachse ausgerichtet ist und/oder ein Aussendurchmesser der Kante bezüglich der Steckachse grösser als der Bauchdurchmesser ist.

Die Kante kann insbesondere direkt angrenzend an den Bauchbereich ausgeformt sein, insbesondere wobei die Kante an das Bauchende angrenzt und die Kante, insbesondere die Kantenfläche, zum Zusammenwirken mit dem Federelement der Hülse konfiguriert und bereitgestellt ist.

In einer Ausführungsform weist die Steckvorrichtung einen die Steckachse umfassenden Anschlag mit einer in Richtung des vorderen Endes der Steckvorrichtung bereitstellten Anschlagfläche zur Begrenzung einer Versenktiefe für die Steckvorrichtung auf, wobei eine Normale auf die Anschlagfläche im Wesentlichen parallel zur Steckachse ausgerichtet ist und/oder ein Aussendurchmesser des Anschlags bezüglich der Steckachse grösser als der Bauchdurchmesser ist, insbesondere grösser als der Aussendurchmesser der Kante, und wobei der Anschlag zwischen der Widerhakenanordnung und dem Zapfen angeordnet ist.

Durch die Anordnung eines solchen Anschlags kann eine gewünschte Einschlagtiefe bzw. eine Versenktiefe der Steckvorrichtung definiert werden. In anderen Worten kann die Steckvorrichtung in eine dafür vorgesehene Bohrung nur bis zu einem bestimmten Teil in das Werkstück eingesteckt, eingedrückt oder eingeschlagen werden. Dies schafft den Vorteil, dass ein Benutzer der Steckvorrichtung zum Anbringen der Bohrung eine vergleichsweise grosse Tiefentoleranz ausnutzen kann, wobei die Steckvorrichtung unabhängig von der Tiefe der Bohrung (sofern die Bohrung eine Mindesttiefe zum Versenken der Widerhakenanordnung aufweist) durch den Anschlag bis zu einem vorgesehenen und gewünschten Anteil versenkt wird. So kann insbesondere ein verlässliches Zusammenwirken mit der Aufnahmevorrichtung bereitgestellt werden, d.h. die Steckvorrichtung ist immer nur soweit versenkt, dass der Zapfen immer noch genügend tief in die Hülse eingeführt und so die Vorspannkraft erzeugt werden kann.

Die Erfindung betrifft ferner ein Verbindungssystem zum mechanischen Verbinden zweier Werkstoffe, insbesondere für den Möbelbau, mit einer oben beschriebenen Aufnahmevorrichtung mit einer eine Erstreckungsachse umfassenden Hülse zur Aufnahme eines Zapfens, und mit einer oben beschriebenen Steckvorrichtung mit den Zapfen. Das Verbindungssystem ist derart konfiguriert, dass bei in die Hülse eingesetztem Zapfen in axialer Richtung bezüglich der Erstreckungsachse bzw. Steckachse eine Verspannung des Zapfens mit der Hülse erfolgt und bereitgestellt ist, wobei der Zapfen und die Hülse axial entlang einer gemeinsamen Vorspannstrecke gegeneinander gedrückt werden.

Insbesondere können die Aufnahmevorrichtung und die Steckvorrichtung derart aufeinander abgestimmt und konfiguriert sein, dass die Länge der Vorspannstrecke mindestens 0.5 mm, insbesondere mindestens 1 mm, beträgt. Im Speziellen liegt die Länge der Vorspannstrecke zwischen 1 bis 2 mm.

Das erfindungsgemässe Verbindungssystem aufweisend eine Aufnahmevorrichtung und eine zugehörige Steckvorrichtung wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen. Im Einzelnen zeigen
- Fig. 1:: schematisch ein Anwendungsbeispiel des Verbindungssystems zur Verbindung zweier Holzplatten;
- Fig. 2:: eine seitliche Detailansicht der jeweils in einer Holzplatte verankerten miteinander zu koppelnden Aufnahme- und Steckvorrichtung gemäss Fig. 1;
- Fig. 3:: eine äussere Ansicht einer Ausführungsform der Aufnahmevorrichtung in einer Profilansicht (oben), in einer Seitenansicht (unten links) und in einer frontalen Ansicht (unten rechts);
- Fig. 4:: einen Schnitt durch die Seitenansicht der Aufnahmevorrichtung gemäss Fig. 3;
- Fig. 5:: eine äussere Ansicht einer Ausführungsform der Steckvorrichtung in einer Profilansicht (oben), in einer Seitenansicht (unten links) und in einer frontalen Ansicht (unten rechts);
- Fig. 6:: eine weitere Ausführungsform eines erfindungsgemässen Verbindungssystems;
- Fig. 7:: eine weitere Ausführungsform einer erfindungsgemässen Aufnahmevorrichtung eines Verbindungssystems nach Fig. 6 und
- Fig. 8:: eine weitere Ausführungsform einer erfindungsgemässen Steckvorrichtung eines Verbindungssystems nach Fig. 6.

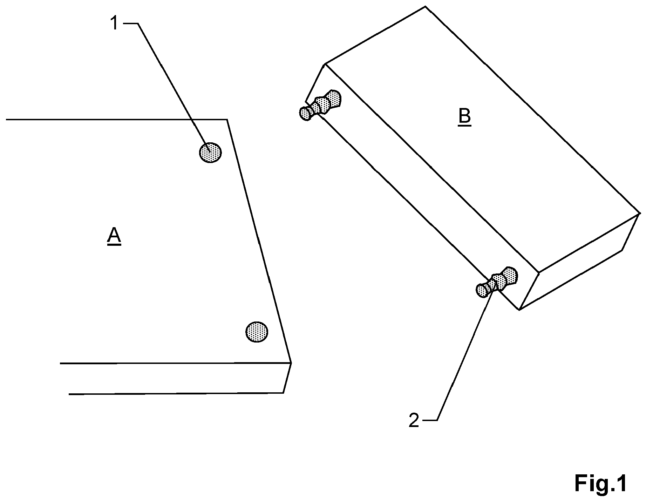

**Figur 1** zeigt schematisch ein Anwendungsbeispiel des Verbindungssystems zur Verbindung zweier Werkstoffe A, B. Die Verbindungselemente, d.h. eine Aufnahmevorrichtung 1 und eine zugehörige Steckvorrichtung 2 sind beispielsweise aus Kunststoff gebildet und werden zum Verbinden von zwei Holzplatten im Möbelbau verwendet, wobei die Holzplatten A, B, beispielsweise miteinander mechanisch gekoppelt und verleimt werden sollen.

In der gezeigten Ausführungsform sind mehrere Aufnahmevorrichtungen 1 auf derselben Holzplatte A installiert, wobei auf einer weiteren Holzplatte B mehrere Steckvorrichtungen 2 installiert sind. Dies ermöglicht beispielsweise eine Stapelung der Platten oder Werkstoffe, um einen einfachen Transport zu gewährleisten. In einem weiteren Szenario können beispielsweise die Steckvorrichtungen 2 auch erst vor dem Zusammenfügen der beiden Platten A, B installiert werden. Je nach Einsatz des Verbindungssystems sind auch gemischte Anordnungen der Verbindungselemente möglich, d.h. Aufnahmevorrichtungen und Steckvorrichtungen jeweils auf beiden Holzplatten, solange jeder Aufnahmevorrichtung eine Steckvorrichtung zuordenbar ist.

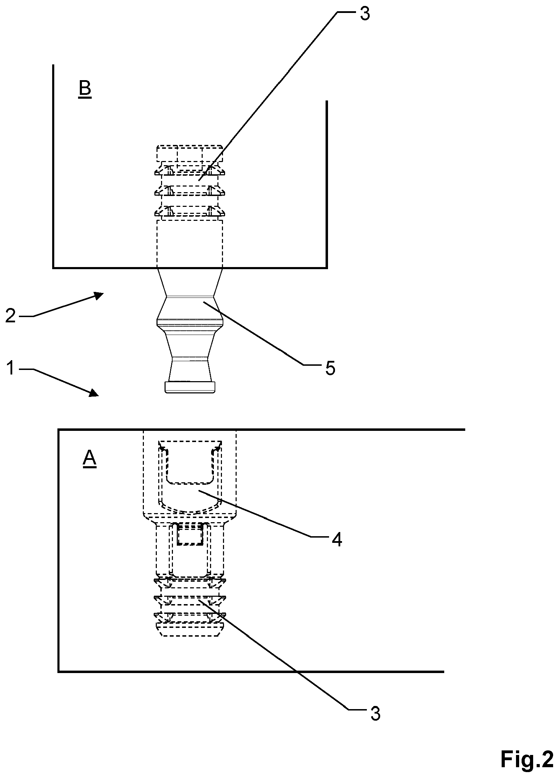

Wie in **Figur 2** dargestellt, weisen die beiden Verbindungselemente 1, 2 jeweils eine Widerhakenanordnung 3 zum jeweiligen Verankern der Elemente in einer Bohrung der jeweiligen Werkstoffe A, B auf. Ferner weist die Aufnahmevorrichtung 1 eine Hülse 4 zur Aufnahme eines Zapfens 5 der Steckvorrichtung auf.

Vorzugsweise wird die Aufnahmevorrichtung 1 komplett in der Holzplatte A versenkt angeordnet. In der gezeigten Ausführungsform sind die Verbindungselemente 1, 2 zylindrisch ausgebildet, so dass die Steckvorrichtung 2 mittels einer einzelnen Bohrung und die Aufnahmevorrichtung 1 mittels einer zweistufigen Bohrung in die jeweiligen Holzplatten installiert werden können.

Nach dem Anbringen der Bohrungen in den zu verbindenden Werkstoffen A, B werden die Verbindungselemente 1, 2 jeweils in die Bohrungen eingepresst. Anschliessend können die Holzplatten A, B beispielsweise mit Klebstoff beschichtet und mittels Zusammenklicken der Verbindungselemente 1, 2 miteinander gekoppelt werden.

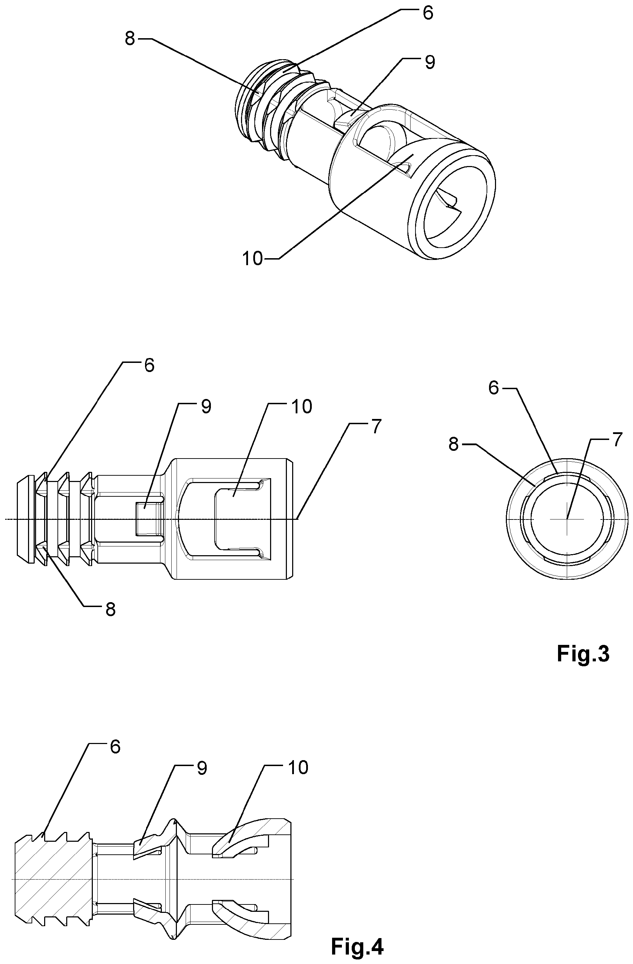

**Figur 3** zeigt im oberen Teil eine äussere Profilansicht einer Ausführungsform der Aufnahmevorrichtung und im unteren Teil eine Seiten- und eine Frontalansicht. Ferner zeigt **Figur 4** einen Schnitt durch die Seitenansicht aus Fig. 3.

In einem vorderen Teil der Aufnahmevorrichtung sind Spreizelemente 6 der Widerhakenanordnung angebracht, welche in drei in Axialrichtung der Erstreckungsachse 7 beabstandeten Ringen um die Erstreckungsachse angeordnet sind, wobei die Ringe jeweils vier voneinander freigestellte Spreizelemente 6 aufweisen. Dadurch werden drei mal vier Rückhalter 6 (Spreizelemente) in Form von Verrippungen gebildet, wobei die Verrippungen mit Freistellungen 8 für den Spänefluss ausgestattet sind. Die Verrippungen sind direkt untereinander angeordnet und dienen der Verankerung der Aufnahmevorrichtung bzw. der Steckvorrichtung mit dem zu verbindenden Werkstoff.

Im Anschluss daran ist ein zylindrischer Hohlraum, in dem zwei Klinken 9 angebracht sind (Dome). Diese Klinken sind eine Rückhaltesperre zur sichereren Verbindung der Werkstoffe.

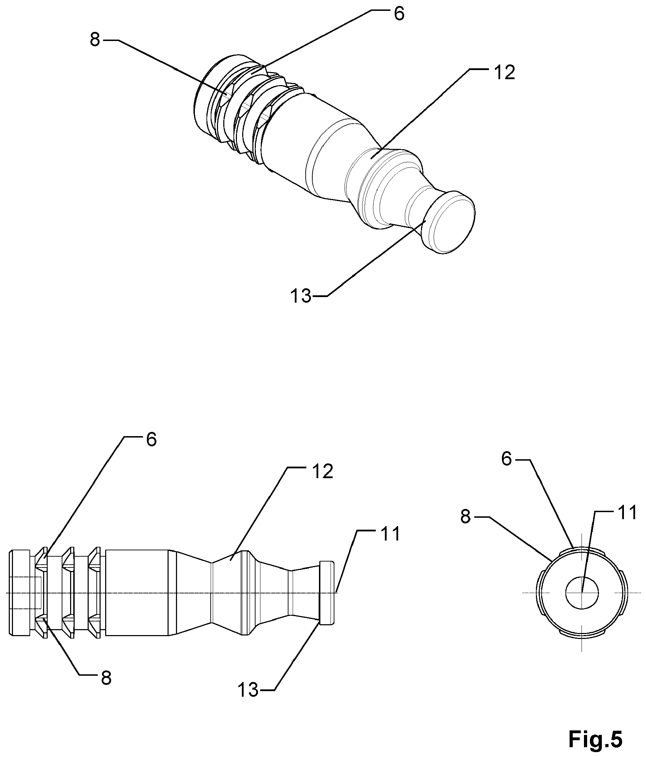

In einem hinteren Teil der Aufnahmevorrichtung folgen die Federelemente 10, hier ausgebildet als Spannkonen, konfiguriert zur Interaktion mit einem Bauchbereich des Zapfens (siehe Figur 5), wobei bei eingesetztem Zapfen das Federelement 10 durch eine radial zur Erstreckungsachse 7 wirkende Kraft gegen den Zapfen drückt. Durch die Interaktion des Federelements 10 mit dem Bauchbereich des Zapfens wird diese radiale Kraft in eine entlang der Erstreckungsachse 7 hin zum vorderen Ende wirkende axiale Kraft auf den Zapfen umgewandelt, so dass der Zapfen als Reaktion auf die axiale Kraft entlang der Erstreckungsachse hin zum vorderen Ende gedrückt wird. Dies bewirkt eine Federwirkung auf die zu verbindenden Teile, welche wiederum eine Vorspannung erzeugt, beispielsweise um eine optimale Verklebung der beiden Holzelemente zu gewährleisten.

**Figur 5** zeigt im oberen Teil eine äussere Profilansicht einer Ausführungsform der Steckvorrichtung und im unteren Teil jeweils eine Seiten- und eine Frontalansicht.

In einem vorderen Teil der Steckvorrichtung sind wiederum Spreizelemente 6 der Widerhakenanordnung angebracht, welche im gezeigten Beispiel identisch ist zur Widerhakenanordnung der in Figur 3 gezeigten Aufnahmevorrichtung. Entsprechend wird bezüglich der Widerhakenanordnung auf die Beschreibung zu Fig. 3 verwiesen.

In einem hinteren Teil weist die Steckvorrichtung einen eine Steckachse 11 umfassenden Zapfen zum Einführen in die in Fig. 3 gezeigte Aufnahmevorrichtung auf. Der Zapfen weist einen die Steckachse 11 umfassenden Bauchbereich 12 auf, konfiguriert um beim Zusammenklicken der Steckvorrichtung mit der Aufnahmevorrichtung in Interaktion mit den Federelementen 10 (siehe Figuren 3 und 4) zu treten. Der Bauchbereich 12 ist so dimensioniert und geformt, dass bei eingesetztem Zapfen in die Hülse aufgrund eines Drückens des Federelements 10 gegen den Bauchbereich eine zum hinteren Ende der Steckvorrichtung hin wirkende axiale Kraft auf den Zapfen erzeugbar ist.

Ferner weist der Zapfen in der gezeigten Ausführungsform eine die Steckachse 11 umfassende Kante 13 auf, welche in Interaktion mit den beiden in Fig. 3 gezeigten Klinken 9 eine Rückhaltesperre zur sichereren Verbindung der Werkstoffe bildet.

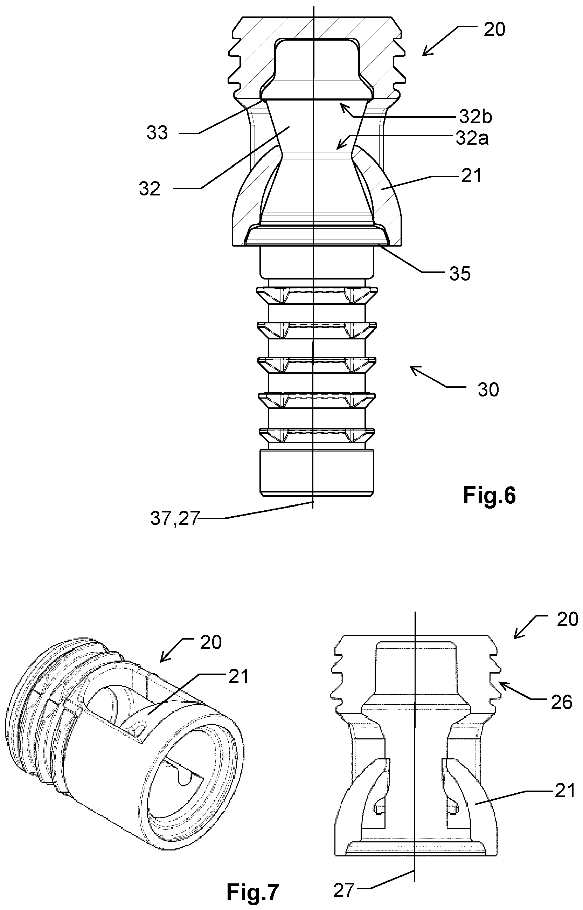

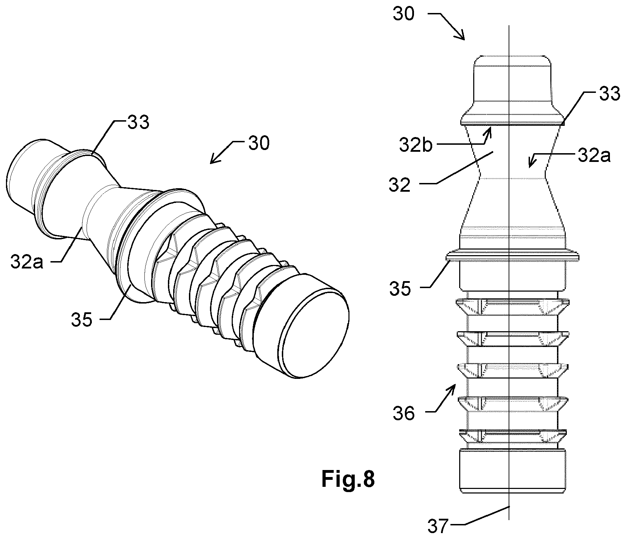

**Figur 6** zeigt eine weitere Ausführungsform eines erfindungsgemässen Verbindungssystems mit einer Aufnahmevorrichtung 20 und einer Steckvorrichtung 30. Die Aufnahmevorrichtung 20 ist zudem mit **Figur 7****,** die Steckvorrichtung 30 mit **Figur 8** dargestellt. Die Erstreckungsachse 27 der Aufnahmevorrichtung 20 und die Steckachse 37 der Steckvorrichtung 30 liegen hier parallel, insbesondere koaxial vor. Die Ausführungsform weist eine kompakte Bauart auf und kann mittels jeweils einer Bohrung auf jeder Werkstückseite einfach mit dem jeweiligen Werkstück verbunden werden.

Sowohl die Aufnahmevorrichtung 20 als auch die Steckvorrichtung 30 weist eine Widerhakenanordnung mit entsprechenden Spreizelementen 26,36 auf.

Die Hülse der Aufnahmevorrichtung 20 verfügt über Federelemente 21, welche zum Zusammenwirken mit dem Bauchbereich 32 der Steckvorrichtung 30 ausgebildet sind. Im gezeigten eingesteckten Zustand (Figur 6) drücken die Federelemente 21 gegen den Bauchbereich 32 und erzeugen dabei eine axial wirkende Vorspannkraft, welche den Zapfen der Steckvorrichtung 30 in die Hülse drückt. Hier drücken die Federelemente 21 gegen die Taille 32a des Bauchbereichs. Wird der Zapfen aus der Hülse gezogen, greifen die Federelemente in der Folge an einem Punkt näher bei einem Bauchende 32b des Bauchbereichs 32 an. Dabei resultiert eine grössere (radiale) Kraft zwischen den Federelementen 21 und dem Bauchbereich 32 und damit eine vergrösserte (axiale) Vorspannkraft, welche den Zapfen mit entsprechend grösserer Kraft in die Hülse drückt.

Durch eine an der Steckvorrichtung 30 ausgebildete Kante 33 kann der Zapfen maximal bis zum Kontaktieren der Federelemente 21 mit der Kante 33 herausgezogen werden. Durch ein Anschlagen der Federelemente 21 an der Kante 33 wird ein weiteres Herausziehen gehemmt bzw. unterbunden. Ein Trennen von Aufnahmevorrichtung 20 und Steckvorrichtung 30 ist nicht mehr zerstörungsfrei möglich. Die Federelemente 21 sind zu diesem Zweck in ihrer Dimensionierung und Anordnung entsprechend auf das Design der Steckvorrichtung 30, insbesondere auf das Design der Kante 33, abgestimmt.

Die Steckvorrichtung 30 weist einen Anschlag 35 auf. Dieser Anschlag 35 verhindert ein unerwünschtes Versenken der Steckvorrichtung in einem Werkstück. Das vordere Ende der Steckvorrichtung 30, an welchem die Widerhakenanordnung vorgesehen ist, kann damit bis zum Anschlag 35 versenkt werden, d.h. bis der Anschlag 35 eine Oberfläche des Werkstückes (Werkstoffes) berührt. Eine hierfür vorgesehene Bohrung ist entsprechend an den Durchmesser der Widerhakenanordnung anzupassen.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Aufnahmevorrichtung (1,20) zur Aufnahme eines Zapfens (5) für eine mechanische Verbindung zweier Werkstoffe (A, B), insbesondere für den Möbelbau, wobei die Aufnahmevorrichtung eine längs einer Erstreckungsachse (7,27) ausgebildete längliche Form hat, wobei
• die Aufnahmevorrichtung (1,20) an einem vorderen Ende eine Widerhakenanordnung (3) zum Verankern der Aufnahmevorrichtung in einem Bohrloch eines Werkstoffs (A) aufweist, wobei die Widerhakenanordnung einen die Erstreckungsachse umfassenden Grundkörper mit radial aus dem Grundkörper herausragenden Spreizelementen (6,26) aufweist, welche konfiguriert sind, dass sie bei einem Einpressen der Widerhakenvorrichtung (3) in das Bohrloch eine widerhakende Wirkung zur Hemmung der Lösung der Widerhakenanordnung aus dem Bohrloch entfalten,
• die Aufnahmevorrichtung (1,20) eine von einem dem vorderen Ende gegenüberliegendem hinteren Ende zugängliche, mit der Widerhakenanordnung (3) verbundene und die Erstreckungsachse (7,27) umfassende Hülse (4) zur Aufnahme des Zapfens (5) aufweist, und
• die Hülse (4) eine Vorspannanordnung zum Erzeugen einer Vorspannung des Zapfens (5) in Richtung des vorderen Endes aufweist, wobei die Hülse (4) derart konfiguriert ist, dass
∘ die Vorspannanordnung ein Federelement (10,21) aufweist, konfiguriert zur Interaktion mit einem Bauchbereich (12,32) des Zapfens (5),
∘ bei eingesetztem Zapfen (5) das Federelement (10,21) durch eine radial zur Erstreckungsachse (7,27) wirkende Kraft gegen den Zapfen (5) drückt,
∘ durch die Interaktion des Federelements (10,21) mit dem Bauchbereich (12,32) eine entlang der Erstreckungsachse (7,27) hin zum vorderen Ende wirkende axiale Kraft auf den Zapfen (5) erzeugt wird, und
∘ der Zapfen (5) als Reaktion auf die axiale Kraft innerhalb einer hülsenseitigen Vorspannstrecke in der Hülse (4) entlang der Erstreckungsachse (7,27) hin zum vorderen Ende gedrückt wird.

2. Aufnahmevorrichtung (1,20) gemäss Anspruch 1,
**dadurch gekennzeichnet, dass**
die Hülse (4) eine Rastanordnung aufweist, die konfiguriert ist zum Zusammenwirken mit einer Kante (13,33) des Zapfens (5), wobei ein Zusammenwirken der Rastanordnung mit der Kante (13,33) ein Einführen des Zapfens (5) in die Hülse (4) in Richtung des vorderen Endes zulässt, jedoch ein Herausziehen in Richtung des hinteren Endes hemmt.

3. Aufnahmevorrichtung (1,20) gemäss Anspruch 2,
**dadurch gekennzeichnet, dass**
die Rastanordnung eine Klinke (9) aufweist, insbesondere mindestens zwei Klinken, wobei die Klinke (9) derart gegen die Erstreckungsachse (7,27) vorgespannt ist, dass diese ein Einführen des Zapfens (5) in die Hülse (4) in Richtung des vorderen Endes zulässt, durch ein Eingreifen in die Kante (13,33) jedoch ein Rausziehen in Richtung des hinteren Endes hemmt, insbesondere wobei die Rastanordnung relativ zur Vorspannanordnung näher beim vorderen Ende angeordnet ist.

4. Aufnahmevorrichtung (1,20) gemäss Anspruch 3,
**dadurch gekennzeichnet, dass**
die Hülse (4) derart konfiguriert ist, dass die hülsenseitige Vorspannstrecke in Richtung des hinteren Endes durch die Klinke (9) begrenzt ist, welche bei eingesetztem Zapfen (5) als Anschlag für die Kante (13,33) wirkt.

5. Aufnahmevorrichtung (1,20) gemäss Anspruch 2,
**dadurch gekennzeichnet, dass**
das Federelement (10,21) die Rastanordnung der Hülse (4) bildet und konfiguriert ist zum Zusammenwirken mit der Kante (13,33) des Zapfens (5), wobei das Federelement (10,21) derart gegen die Erstreckungsachse (7,27) vorgespannt ist, dass dieses Federelement (10,21) ein Einführen des Zapfens (5) in die Hülse (4) in Richtung des vorderen Endes zulässt, durch das Zusammenwirken mit der Kante (13,33) jedoch das Herausziehen in Richtung des hinteren Endes hemmt.

6. Aufnahmevorrichtung (1,20) gemäss einem der vorherigen Ansprüche,
**dadurch gekennzeichnet, dass**
die Aufnahmevorrichtung (1,20) aus Kunststoff ist, insbesondere aus glasfaserverstärktem Kunststoff.

7. Aufnahmevorrichtung (1,20) gemäss einem der vorherigen Ansprüche,
**dadurch gekennzeichnet, dass**
das Federelement (10,21) ausgebildet ist als ein sich längs der Erstreckungsachse (7,27) erstreckendes federnd ausgebildetes Hebelelement, welches derart konfiguriert ist, dass bei in die Hülse (4) eingeführtem Zapfen (5) ein von der Hülse (4) abstehender Bereich des Hebelelements radial gegen den Bauchbereich (12,32) des Zapfens (5) drückt,
insbesondere wobei die Vorspannanordnung zwei sich gegenüberliegende jeweils längs der Erstreckungsachse erstreckende federnd ausgebildete Hebelelemente aufweist, welche konfiguriert sind, dass bei in die Hülse (4) eingeführtem Zapfen (5) jeweils ein von der Hülse (4) abstehender Bereich des jeweiligen Hebelelements radial gegen den Bauchbereich (12,32) des Zapfens (5) drückt.

8. Steckvorrichtung (2,30) zum Einstecken in eine Aufnahmevorrichtung (1,20) für eine mechanische Verbindung zweier Werkstoffe (A, B), insbesondere für den Möbelbau, wobei die Steckvorrichtung (2) eine längs einer Steckachse (11,37) ausgebildete längliche Form hat, wobei
• die Steckvorrichtung (2,30) an einem vorderen Ende eine Widerhakenanordnung (3) zum Verankern der Steckvorrichtung (2) in einem Bohrloch eines Werkstoffs (B) aufweist, wobei die Widerhakenanordnung (3) einen die Steckachse (11,37) umfassenden Grundkörper mit radial aus dem Grundkörper herausragenden Spreizelementen (6,36) aufweist, welche konfiguriert sind, dass sie bei einem Einpressen der Widerhakenvorrichtung (3) in das Bohrloch eine widerhakende Wirkung zur Hemmung der Lösung der Widerhakenanordnung (3) aus dem Bohrloch entfalten,
• die Steckvorrichtung (2,30) an einem dem vorderen Ende gegenüberliegendem hinteren Ende einen mit der Widerhakenanordnung (3) verbundenen die Steckachse (11,37) umfassenden Zapfen (5) zum Einführen in eine Hülse (4) gemäss einem der Ansprüche 1 bis 7aufweist, und
• der Zapfen (5) einen die Steckachse (11) umfassenden Bauchbereich (12,32) aufweist, der derart dimensioniert und ausgeformt ist, dass der Bauchbereich (12,32) bei eingesetztem Zapfen (5) in die Hülse (4) in Interaktion mit einem Federelement (10,21) der Hülse (4) tritt, dass aufgrund eines Drückens des Federelements (10,21) gegen eine Kontaktfläche des Bauchbereichs (12,32) durch eine radial zur Steckachse (11,37) wirkende Kraft eine entlang der Steckachse (11,37) hin zum hinteren Ende wirkende axiale Kraft auf den Zapfen (5) erzeugt wird.

9. Steckvorrichtung (2,30) gemäss Anspruch 8,
**dadurch gekennzeichnet, dass**
der Bauchbereich (12,32) des Zapfens (5) derart ausgebildet ist, dass der Umriss des Bauchbereichs eine trapezförmige, pyramidenförmige, oder schlauchförmige Ausbuchtung aufweist, welche insbesondere Abrundungen aufweist.

10. Steckvorrichtung (2,20) gemäss Anspruch 8 oder 9,
**dadurch gekennzeichnet, dass**
der Bauchbereich (12,32) des Zapfens (5) eine Taille (32a) mit meinem bezüglich der Steckachse (11,37) definierten Taillendurchmesser und ein entlang der Steckachse von der Taille entferntes Bauchende (32b) mit einem maximalen Bauchdurchmesser aufweist, wobei
• der maximale Bauchdurchmesser grösser als der Taillendurchmesser ist,
• das Bauchende (32b) relativ zur Taille (32a) näher beim hinteren Ende der Steckvorrichtung (2,30) angeordnet ist und
• ein Abstand zwischen der Taille und dem Bauchende eine zapfenseitige Vorspannstrecke definiert,
wodurch bei in die Hülse (4) eingesetztem Zapfen (5) ein derartiges Zusammenwirken des Federelements (10,21) mit dem Bauchbereich (12,32) resultiert, dass bei Interaktion des Federelements (10,21) mit der Taille eine kleinere axiale Kraft hin zum hinteren Ende der Steckvorrichtung (2,30) erzeugt ist, als bei Interaktion des Federelements (10,21) mit dem Bauchende.

11. Steckvorrichtung (2,30) gemäss einem der Ansprüche 8 bis 10,
**dadurch gekennzeichnet, dass**
der Zapfen (5) eine die Steckachse (11) umfassende Kante (13,33) aufweist, die derart konfiguriert ist, dass bei in die gemäss einem der Ansprüche 2 bis 5 ausgebildete Hülse (4) eingesetztem Zapfen (5) die Rastanordnung der Hülse (4) derart in die Kante (13) eingreift, dass dabei eine Hemmung des Herausziehens der Steckvorrichtung (2) aus der Hülse (4) in Richtung des vorderen Endes der Steckvorrichtung (2) erzeugt wird, insbesondere wobei das Federelement (10,21) oder die Klinke (9) die Funktion der Rastanordnung bereitstellt und die Kante (13,33) mit dem Federelement (10,21) oder der Klinke (9) zusammenwirkt.

12. Steckvorrichtung (2,30) gemäss Anspruch 11,
**dadurch gekennzeichnet, dass**
die Kante (13,33) eine Kantenfläche in Richtung des vorderen Endes der Steckvorrichtung (2,30) bereitstellt, insbesondere wobei
• eine Normale auf die Kantenfläche im Wesentlichen parallel zur Steckachse ausgerichtet ist und/oder
• ein Aussendurchmesser der Kante (13,33) bezüglich der Steckachse grösser als der Bauchdurchmesser ist.

13. Steckvorrichtung (2,30) gemäss Anspruch 11 oder 12,
**dadurch gekennzeichnet, dass**
die Kante (13,33) direkt angrenzend an den Bauchbereich (12,32) ausgeformt ist, insbesondere wobei die Kante (13,33) an das Bauchende angrenzt, und die Kante (13,33), insbesondere die Kantenfläche, zum Zusammenwirken mit dem Federelement (10,21) der Hülse (4) bereitgestellt ist.

14. Steckvorrichtung (2,30) gemäss einem der Ansprüche 11 bis 13,
**dadurch gekennzeichnet, dass**
die Steckvorrichtung (2,30) einen die Steckachse (11,37) umfassenden Anschlag (35) mit einer in Richtung des vorderen Endes der Steckvorrichtung (2,30) bereitstellten Anschlagfläche zur Begrenzung einer Versenktiefe für die Steckvorrichtung (2,30) aufweist, wobei
• eine Normale auf die Anschlagfläche im Wesentlichen parallel zur Steckachse ausgerichtet ist und/oder
• ein Aussendurchmesser des Anschlags (35) bezüglich der Steckachse grösser als der Bauchdurchmesser, insbesondere grösser als der Aussendurchmesser der Kante (13,33), ist,
wobei der Anschlag (35) zwischen der Widerhakenanordnung (3) und dem Zapfen (5) angeordnet ist.

15. Verbindungssystem zum mechanischen Verbinden zweier Werkstoffe (A, B), insbesondere für den Möbelbau, aufweisend
• eine Aufnahmevorrichtung (1,20) gemäss einem der Ansprüche 1 bis 7 mit einer eine Erstreckungsachse (7) umfassenden Hülse (4) zur Aufnahme eines Zapfens (5), und
• eine Steckvorrichtung (2,30) gemäss einem der Ansprüche 8 bis 14 mit dem Zapfen (5),
wobei das Verbindungssystem derart konfiguriert ist, dass bei in die Hülse (4) eingesetztem Zapfen (5) in axialer Richtung bezüglich der Erstreckungsachse (7,37) eine Verspannung des Zapfens (5) mit der Hülse (4) erfolgt, wobei der Zapfen (5) und die Hülse (4) axial entlang einer gemeinsamen Vorspannstrecke gegeneinander gedrückt werden, insbesondere wobei die Aufnahmevorrichtung (1,20) und die Steckvorrichtung (2,30) derart aufeinander abgestimmt und konfiguriert sind, dass die Länge der Vorspannstrecke mindestens 0.5 mm, insbesondere mindestens 1 mm, beträgt, im Speziellen wobei die Länge der Vorspannstrecke zwischen 1 bis 2 mm liegt.
